# EUROPEAN PATENT APPLICATION

(11) **EP 1 245 593 A1**
(43) Date of publication of application: **02.10.2002**
(21) Application number: 01201169.8
(22) Date of filing: 27.03.2001
(51) Int. Cl.: C08F 10/02, C08F 4/69

(54) **Process for the preparation of polyethylene**

(71) Applicant: DSM N.V., 6160 MA Geleen (NL)
(72) Inventor: Postema, Rutgerus Antonie Jacobus, 6161 GR Geleen (NL); Nooijen, Godefridus Arnoldus Henri, 5981 CA Helden (NL)

(57) **Abstract**

The invention relates to a slurry process for the preparation of polyethylene with a density greater than 960 kg/m³ and a melt index (HLMI) between 35 and 60 g/10 min, by polymerizing ethylene in the presence of a chromium-containing catalyst The polymerization takes place at a temperature of at most 105°C and in the presence of at most 50 µmol/litre diluent of an alkyl-containing co-catalyst.

More preferably the process takes place in the absence of an alkyl-containing co-catalyst. The invention also relates to moulded products, such as for example milk bottles, obtained with this polyethylene.

## Description

The invention relates to a slurry process for the preparation of polyethylene with a density greater than 960 kg/m³ and a melt index (HLMI) between 35 and 60 g/10 min by polymerising ethylene in the presence of a silica-supported chromium-containing catalyst and a diluent. The invention also relates to moulded products, such as for example milk bottles, obtained with the this polyethylene.

GB-A-2.090.158 (example 24) describes the preparation of polyethylene with a density of 966.4 kg/m³ and a HLMI of 56. However, the obtained polyethylene is not suitable for the production of certain articles, such as for example milk bottles, because of the considerable amount (4 ppm) of triethylboron being applied as the co-catalyst during the polymerization.

Polyethylene is suitable to be applied in the production of blow moulded articles via the so-called "blow moulding technique". In fabricating blow moulded articles, for example milk bottles, a balance between the physical properties and the processing properties of the polymer, for example polyethylene, must be present.

Because of the physical properties of the manufactured article, the density of the polymer from which the article is manufactured has to be as high as possible because a high density results in a high rigidity of the article to make it possible to produce, for example, a bottle, being resistant to deformation. Due to the higher rigidity it is possible to obtain a product having the desired requirements and additionally having thinner walls so that savings in the consumption of (poly)ethylene are achieved.

Because of the processing properties the polymer must have good flow properties. The higher the flow of the polymer, the faster the articles may be produced. To achieve high flow values the polymerization must generally be carried out at a relatively high temperature. However, this high temperature involves the risk of the so-called "fouling curve" being exceeded. The fouling curve represents the relationship between the polymerization temperature and the density of a polymer to be produced where "fouling" just does not take place. The higher the density of the polymer the higher the polymerization temperature (and thus the melt index) may be before fouling occurs. The fouling curvethus separates the "safe" polymerization range (no fouling) from the "unsafe" range (fouling). The result of a transgression of the "fouling curve" is that the reactor wall is fouled with polymer. Consequently the heat of reaction can no longer be removed effectively and the reactor must be taken out of operation.This clogging due to fouling by the polymer is a problem because the polymer first deposits on the walls, then accumulates quickly and finally blocks the whole reactor.

For the production of bottles for foodstuffs, for example milk, there exist requirements with respect to smell and/or taste. Consequently, during the production of the polymer the amount of compounds that adversely influence the taste and smell have to be as low as possible. Such a compound is for example an alkyl-containing co-catalyst, such as for example triethylboron generally applied in combination with a chromium-containing catalyst. If present in relatively large quantities this compound may lead to undesired smell and taste constituents in the production of (milk) bottles. Moreover, the use of triethylboron leads to in-situ formation of hexene on the catalyst surface from the large excess of ethylene present. This is detrimental to the desired end result because the incorporation of hexene in the growing polyethylene chain leads to a reduction in density, whereas it is intended to produce polyethylene having a relatively high density.

However, the presence of the alkyl-containing co-catalyst very sharply shortens the induction period of the catalyst or in some cases even completely eliminates it. Over one and the same period a catalyst without an alkyl-containing co-catalyst will have a lower productivity and activity than a catalyst alongside which an alkyl-containing co-catalyst is present. The reason for this is that in the latter case polymerization is effectively carried out during the whole or almost the whole polymerization time, in contrast with the situation in in which the co-catalyst is absent, in which case part of the polymerization period cannot be used due to the induction period of the catalyst.

In addition, the absence of the alkyl-containing co-catalyst may increase the risk of a less stable process because the co-catalyst also plays a role in the removal of impurities in feed streams.

It is the object of the present invention to provide a process for the preparation of polyethylene resulting in the required properties of the polymer which has to be applied in the production of moulded articles, for example, milk bottles.

The process according to the present invention is characterised in that the polymerization of ethylene, takes place in the presence of a chromium-containing catalyst at a temperature of at most 105°C in the presence of at most 50 µmol/litre diluent of an alkyl-containing co-catalyst.

Suitable diluents include, for example, isobutane or propane.

Preferably, the diluent is isobutane.

Preferably, the temperature is at least 100 °C .

Preferably, the alkyl containing co-catalyst is an alkylboron compound.

The present invention results in a process which reduces the fouling of the reactor essentially.

According to a further preferred embodiment of the invention the process is carried out in the presence of at most 25 µmol/litre diluent of the alkyl-containing co-catalyst.

According to another preferred embodiment this amount is between 1 and 10 µmol/litre diluent.

More preferably the process is carried out in the absence of an alkyl-containing co-catalyst.

The polymerisation may take place in the presence of a comonomer with 3 to 10 C atoms. Suitable comonomers include for example butene and hexene.

Preferably, the process according to the invention is applied in the absence of a comonomer.

An additional advantage of the process according to the present invention is that the powder properties of the polyethylene ,for example, the bulk density (poured) and the average particle size of the polyethylene powder (D₅₀) are improved. The higher the bulk density (poured) is, the more polyethylene fits in a specific volume; for example the volume of the reactor or of the means of transport, Thus the bulk density (poured) has to be as high as possible. The polyethylene obtained with the process according to the present invention may have a bulk density (poured) of at least 350 kg/m³ (determined according to ISO 60)

Preferably, the bulk density (poured) is at least 400 kg/m³.

In order to achieve the required mechanical properties the density of the polyethylene produced has to be greater than 960 kg/m³ and preferably higher than 961 kg/m³.

In order to achieve the properties required for processing, the melt index (measured as the high load melt index (HLMI) according to ISO 1133) is between 35 and 60 g/10 min. Preferably, the melt index is between 40 and 55 g/10 min.

Preferably, the chromium-containing catalyst is on a silica support. Preferably the silica support has a specific surface of at least 300 m²/g and a pore volume of at least 2 cm³/g. More preferably the support has a pore volume of at least 2.2 cm³/g. A support having a higher pore volume results in a higher melt index of the polyethylene. Preferably the specific surface is at least 350 m²/g. These properties of the support, pore volume and specific surface, are determined before the catalyst is activated at an elevated temperature.

The specific surface is determined using the so-called BET method and the pore volume is determined with nitrogen cappilary condensation. (Recommendations IUPAC 1991; Pure and App. Chem., Vol. 63, 9, 1227-1246.)

The amount of chromium in the catalyst is generally at least 0.8% by weight and preferably at least 1.0 wt%.

The catalyst composition applied in the process according to the invention also may comprise aluminium. The quantity of aluminium present is not critical, but generally this amount ranges between 2 and 5 wt% ( relative to silica) aluminium. Due to the presence of the aluminium a higher melt index may be achieved. A further advantage of the presence of aluminium is the relatively short induction period and as a consequence the higher productivity of the catalyst Generally the catalyst is activated before being applied in the polymerisation reaction. The activation may take place under different conditions. The activation generally takes place at an elevated temperature, for example, at a temperature above 750°C.

The activation may take place in different atmospheres for example in air. According to a preferred embodiment the activation takes place at least partially under an inert atmosphere. Preferably, nitrogen is used. At the same time the temperature is raised slowly. It has been found to be advantageous to change over from the nitrogen atmosphere to an atmosphere of air at a temperature of at most 700°C.

Preferably,the preparation of polyethylene according to the present invention takes place in a so-called dispersion medium in which polyethylene formed during the reaction does not dissolve.

EP-A-857.736 discloses a process for the production of polyethylene, being suitable for blow moulding, in the presence of a catalyst that contains chromium as well as aluminium. The polyethylene produced has a density lower than 960 kg/m³ and a melt index (HLMI) lower than 35. Furthermore the polyethylene is unsuitable to be used in the production of milk bottles because of the presence of 5 ppm of alkyl-containing co-catalyst

The invention will now be elucidated by means of the following non-restrictive examples.

### Example I

The homopolymerization of ethylene was carried out in a liquid-filled 5-liter CSTR at 46 bar in the presence of a chromium catalyst (C34380MS supplied by PQ Corporation). The catalyst had been activated under a flow of dry air at 800°C during 8 hours.

Isobutane (2443 g/h), ethylene (1083 g/h), and hydrogen (1,90 g/h) were continuously fed to the reactor at 103,0 °C.

The amount of catalyst was controlled in order to maintain a hydrogen/ethylene concentration ratio of 0,22 (mole/mole).

The catalyst activity as determined by XRF analysis was 2000 grams of polyethylene powder per gram of catalyst.

The bulk density of the polyethylene powder was 454 kg/m³.

The polyethylene pellets had a HLMI of 47 g/10 min and a density of 962.1 kg/m³

### Example II

The homopolymerization of ethylene was carried out in a liquid-filled 5-liter CSTR at 46 bar in the presence of a chromium catalyst (C34380MS supplied by PQ Corporation). The catalyst had been activated under a flow of dry air at 800°C during 8 hours.

Isobutane (2749 g/h), ethylene (1223 g/h), hydrogen (2,11 g/h), and triethyl borane (9.8 g/h of 5,5 ppm boron in isobutane) were continuously fed to the reactor at 104,0 °C.

The amount of catalyst was controlled in order to maintain a hydrogen/ethylene concentration ratio of 0,21 (mole/mole).

The catalyst activity as determined by XRF analysis was 2850 grams of polyethylene powder per gram of catalyst.

The bulk density of the polyethylene powder was 495 kg/m³. The polyethylene pellets had a HLMI of 44 g/10 min and a density of 961.2 kg/m³

These examples show that the slurry process according to the invention in which the polymerization takes place at a temperature lower than 105°C results in a product suitable to be applied in the production of milk bottles.

## Claims

1. A slurry process for the preparation of polyethylene with a density greater than 960 kg/m³ and a melt index (HLMI) between 35 and 60 g/10 min, by polymerizing ethylene in the presence of a chromium-containing catalyst and a diluent, **characterized in that** polymerization takes place at a temperature of at most 105°C and in the presence of at most 50 µmol/litre diluent of an alkyl-containing co-catalyst.

2. A process according to Claim 1 **characterized in** the process takes place in the absence of an alkyl-containing co-catalyst.

3. A process according to any one of Claims 1-2 **characterized in that** the catalyst has been activated at a temperature of at least 750°C.

4. A process according to Claim 3 **characterized in that** during activation the catalyst has been heated up in a nitrogen atmosphere, which is changed to air at a temperature of at most 700°C.

5. A process according to any one of Claims 1-4 **characterized in that** the catalyst contains a silica support with a specific surface of at least 350 m²/g and a pore volume of at least 2cm³/g.

6. A process according to any one of Claims 1-5 **characterized in that** the catalyst contains at least 0.8 wt% chromium.

7. A process according to any one of Claims 1-6 **characterized in that** the catalyst comprises aluminium in an amount between 2 and 5 % by weight.

8. A process according to any one of Claims 1-7 **characterized in that** the polyethylene has a a melt index (measured as the high load melt index (HLMI) according to ISO 1133) between 35 and 60 g/10 min.

9. A process according to any one of Claims 1-8 **characterized in that** the polyethylene has a bulk density (poured) of at least 350 kg/m³.

10. A moulded article obtained with the polyethylene obtained according to any one of Claims 1-9.

11. A milk bottle obtained with the polyethylene obtained according to any one of Claims 1-9.
